# EUROPEAN PATENT SPECIFICATION

(11) **EP 1 214 457 B1**
(45) Date of publication and mention of the grant of the patent: **29.09.2004**
(21) Application number: 00944517.2
(22) Date of filing: 13.06.2000
(51) Int. Cl.: C22C 38/44

(54) **USE OF A STAINLESS STEEL FOR UMBILICALS IN SEAWATERS**
VERWENDUNG EINES ROSTFREIEN STAHLS FÜR UNTERWASSERHILFSLEITUNGEN IM SEEWASSER
UTILISATION D'UN ACIER INOXYDABLE POUR DES LIAISONS OMBILICALES DANS LES EAUX DE MER

(30) Priority: 21.06.1999 SE 9902346
(43) Date of publication of application: 19.06.2002
(73) Proprietor: Sandvik AB (publ), 811 81 Sandviken (SE)
(72) Inventor: KANGAS, Pasi, S-811 36 Sandviken (SE)
(74) Representative: Taquist, Lennart
(86) International application number: PCT/SE2000/001234
(87) International publication number: WO 2000/079017

(56) References cited:
- EP-A1- 0 534 864
- GB-A- 1 513 157
- US-A- 5 582 656

## Description

The present invention relates to usage of a stainless steel alloy, closer determined a ferritic-austenitic steel alloy for usage in shape of tubes intended for placing on the bottom of the sea, closer determined at exploitation of oil- and gas deposits in the sea. The material in this tube application has therefore to have good corrosion properties in aggressive chloride environments, good mechanical and physical properties, good fatigue properties as well as good compatibility versus that type of hydraulic fluids, which should be transported in the tubes. Tubes for this application are intended for being manufactured such as seamless hot extruded tubes.

Under extraction of oil on the bottom of the sea holes will be drilled down from the bottom of the sea into the oil deposit. On the bottom of the sea, a unit for control of the flow and the continuous transport of the crude oil to those units where the crude oil will be handled and refined to useable products or semi-finished products, will be installed. At the unit on the bottom of the sea there are inter alia valves, which shall control the taking-up/pressure/flowrate etc. and couplings to tubes which give the possibility to inject chemicals down to the oil well. Often methyl alcohol is used for injection with the purpose to avoid the crude oil from coagulate and cause unwanted stoppages in the productionpipe.

The valves and the couplings at the unit on the bottom of the sea are steered hydraulically or electrical from a platform, a productionvessel or another unit on the level of the sea or on land. A so-called umbilical (navel string) connects the steering unit with the units on the bottom of the sea. That part of the umbilical, that lies on the bottom of the sea, for instance between two undersea units on different extraction places, are called static umbilical because these are just in a relatively insignificant scale effected of the sea movements. That part of the umbilical, which is situated between the bottom of the sea and the level of the sea is called dynamical umbilical and is to a great extend effected by the movements in the water and on the level. Examples of such movements are currents in the water, movements of the platform/productionvessel and undulatory motions.

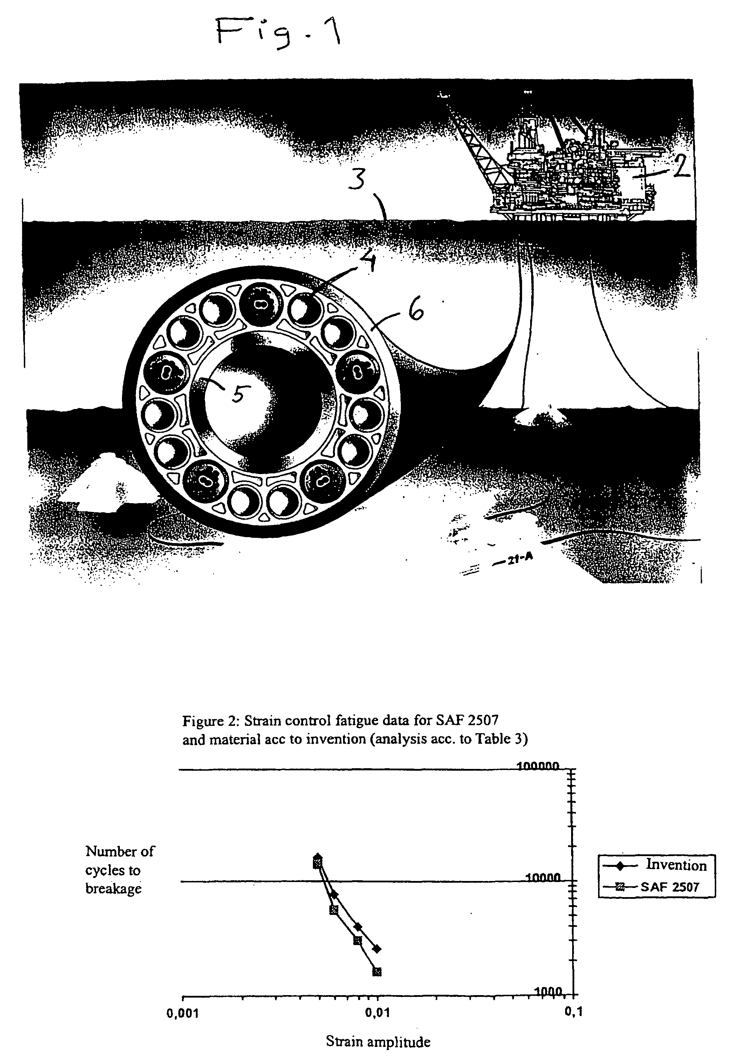

Fig. 1 shows a conventional umbilical tube 1 laid down on the bottom of the sea outgoing from a platform 2 which lies anchored on the level of the sea 3.
In this umbilical a number of tubes 4 is gathered together for the hydraulic and electric control together with a central tube for the injection of chemicals as methyl alcohol to a tube bundle. The umbilical could have different configurations dependent on the demands of service for the units on the bottom of the sea, but usually there is a bigger tube in the center for the injection of methyl alcohol with thinner tubes twisted around this. Often there is used a cover 6 of plastic to gather the umbilical tubes and make the entirety manageable for laying and installation.

The demands on the tubes 4, 5 in umbilical tubes are foremost to be resistant against corrosion and mechanical properties. The tube material has to be resistant against corrosion in seawater, which surrounds the outer surface of the tubes, this property is this which is considered to be the most important since seawater could be very corrosive against stainless steel. Furthermore, the material has to have a high corrosion resistance against the possibly corrosive solutions, which should be injected in the oil spring. The material has to be compatible to the hydraulic fluids, which are used for the hydraulic control without contaminating the fluid. Inevitable impurities could influence the service function at the control unit on the bottom of the sea very negatively.

The mechanical properties of the used tube material are very important for the application umbilical tube. Since the depth could be considerably at the place for the oil extraction, the dynamical part of the umbilical becomes generally long and thereby heavy. This weight has to be carried by the platform or the floating production vessel, and if the umbilical is made lighter the available net lift could be used for other purposes than to lift the umbilical. In practice there are two different ways to reduce the weight of an umbilical with a determined configuration. A lighter material could be chosen or a material with the same density but higher yield point and tensile strength. By choosing a material with higher strength tubes with thinner walls could be used, and thereby the total mass of the umbilical can be reduced. The deeper the sea at the extraction place, the more important becomes the total weight per meter umbilical of the material.

Besides the good corrosion properties and the high strength good fatigue strength properties. This concerns especially for the dynamical part of the umbilical, which to a large extend will be affected by the movements of the water and the floating unit.

The general requirements for an umbilical can be summarized in the following:

| | |
|---|---|
| Content of Fe: | 35-55% |
| PRE (Cr+3.3Mo+16N): | minimal 40 |
| Yield point in tension | Rp0.2min=650MPa. |
| Tensile strength | Rm=800-1000 MPa. |
| Elongation | A5 min 25% |
| Testing temperature acc. to ASTM G48A min 50°C | |
| Testing temperature acc. to ASTM G48B min 35°C | |
| Weldability | |
| Good fatigue resistance | |

The until now most frequently used material for umbilicals has been a ferritic-austenitic stainless steel that will be marketed under the name Sandvik SAF 2507 and which is standardized under the name UNS S32750. Until now this material has been well proved meeting the placed requirements on corrosion resistance and strength. This steel alloy is closer described in the European Patent EP-A-220141. US-A-5 582 656 discloses the use of a known duplex steel suitable to be used in high pressure urea transporting tubes. EP-A-534 864 discloses an annealed high-Mo duplex steel having improved resistance in sea water and an improved impact strength.

It has surpnsmgly appeared that one could achieve a tube material with increased yield point in tension and increased tensile strength and at the same time maintaining good ductility and good pitting corrosion properties by increasing the contents of the important alloy elements Cr, N and also an adequate content of Mo to a achieve a super duplex alloy, which after hot extrusion to seamless tubes later will be cold rolled to the required final dimension and after that finally annealed at an accurately selected level of temperature.

This type of material for applications as umbilical tubes as defined in claim 1 and comparative tests will be given in details in the following.

### Example 1

The test material was manufactured by casting of 170 kg billets, these were hot forged to round bars with a diameter of 126 mm and hot extruded to seamless tubes with a dimension of 48 x 5 mm and also cold rolled to a dimension of 31 x 3 mm. The final annealing was carried out at 1040°C, holding time 5 minutes followed by water quenching. The composition appears from Table 1. These alloys have been taken into account as a comparative example, which indicate that materials like this, which besides are known from the USA patent 5582656, generally do not comply to the requirements of the application in question, but that there is an optimized variant necessary with specific demands on manufacturing to achieve the requirements on this application that were mentioned earlier in the description.

**Table 1.**

| Composition of test material, weight-% | | | | | | | | | |
|---|---|---|---|---|---|---|---|---|---|
| Charge | C | Si | Mn | P | S ppm | Cr | Ni | Mo | N |
| 654667 | 0,016 | 0,19 | 1,02 | 0,010 | 49 | 29,37 | 8,62 | 1,55 | 0,26 |
| 654668 | 0,015 | 0,19 | 0,99 | 0,009 | 46 | 29,30 | 8,84 | 2,03 | 0,25 |
| 654669 | 0,015 | 0,19 | 0,91 | 0,010 | 43 | 29,26 | 8,00 | 2,07 | 0,31 |
| 654670 | 0,015 | 0,19 | 0,88 | 0,011 | 30 | 29,08 | 9,09 | 2,57 | 0,26 |
| 654671 | 0,016 | 0,16 | 1,01 | 0,012 | 32 | 28,81 | 7,48 | 2,50 | 0,37 |
| 654672 | 0,015 | 0,15 | 1,00 | 0,012 | 36 | 29,01 | 6,66 | 2,51 | 0,40 |
| 654674 | 0,016 | 0,16 | 0,88 | 0,011 | 32 | 29,92 | 9,38 | 1,57 | 0,26 |
| 654675 | 0,016 | 0,16 | 0,92 | 0,012 | 35 | 30,39 | 7,74 | 1,50 | 0,39 |
| 654676 | 0,017 | 0,17 | 1,03 | 0,011 | 35 | 30,50 | 6,94 | 1,53 | 0,40 |
| 654678 | 0,017 | 0,17 | 0,99 | 0,011 | 31 | 30,11 | 9,62 | 2,01 | 0,26 |
| 654679 | 0,016 | 0,16 | 0,89 | 0,012 | 38 | 30,15 | 7,95 | 2,08 | 0,35 |
| 654680 | 0,016 | 0,16 | 0,87 | 0,012 | 42 | 30,51 | 6,20 | 2,08 | 0,44 |
| 654683 | 0,016 | 0,16 | 0,96 | 0,011 | 38 | 30,15 | 8,11 | 2,56 | 0,35 |
| 654684 | 0,015 | 0,15 | 0,91 | 0,011 | 44 | 30,61 | 5,71 | 2,57 | 0,48 |

The materials were tested for pitting corrosion in 6% FeCl according to ASTM G48C, but a starting temperature of 40°C and steps of 5°C until that pitting corrosion attacks were obtained. The temperature, when this occurs first is called Critical Pitting Corrosion Temperature (CPT).
Elongation testing was also realized at room temperature. The results of the test appear from Table 2.

**Table 2.**

| Result of the corrosion test according to ASTM G48C and also tensile test of seamless tubes dimension 31 X 3 mm. Average of two tests per charge. | | | | |
|---|---|---|---|---|
| Charge | CPT (°C) | Rp02 (MPa) | Rm (MPa) | A5 (%) |
| 654667 | 40 | 635 | 861 | 32 |
| 654668 | 40 | 646 | 867 | 31 |
| 654669 | 62,5 | 665 | 885 | 34 |
| 654670 | 55 | 666 | 882 | 30 |
| 654671 | 75 | 687 | 908 | 32 |
| 654672 | 75 | 694 | 912 | 35 |
| 654674 | 53,8 | 667 | 879 | 31 |
| 654675 | 65 | 689 | 914 | 35 |
| 654676 | 60 | 698 | 903 | 35 |
| 654678 | 45 | 678 | 890 | 34 |
| 654679 | 75 | 692 | 916 | 35 |
| 654680 | 60 | 695 | 914 | 35 |
| 654683 | 65 | 715 | 926 | 33 |
| 654684 | 60 | 702 | 932 | 33 |

### Example 2

The material was manufactured by AOD-manufacturing, hot extrusion, hot rolling to round bars with a diameter of 126 mm, extrusion of seamless tubes to a dimension of 33.2 x 3.5 mm and also cold rolling to a dimension of 15.2 x 1.2 mm. The annealing was carried out at two different temperatures, 1020°C and 1060°C, holding time 2 minutes, followed by water quenching.

The composition of the material appears from Table 3. The composition of the material lies within the range of the present patent application.

**Table 3.**

| Composition of the tested material, in weight-%. | | | | | | | | | |
|---|---|---|---|---|---|---|---|---|---|
| C | Si | Mn | P | S | Cr | Ni | Mo | N | Ca |
| 0,021 | 0,27 | 0,90 | 0,016 | 0,001 | 28,80 | 6,62 | 2,20 | 0,38 | 0,0026 |

The material was examined regarding to pitting corrosion partially in artificial seawater at increased potential (see table 4), partially in 6%FeCl₃ (see table 5), which is often used for acceptance testing of high alloyed stainless steel materials and which is specified in ASTM G48 standard. In those tests the material was examined in its final shape, i.e. rolled in a pilgrim step rolling mill and annealed, with the surface stripground after annealing. No further grinding of the inner- and outer-surface was undertaken before the testing. The results show that the material in this shape has pitting corrosion properties surely in alignment with them for SAF 2507.

**Table 4.**

| Critical pitting corrosion temperature of umbilical tubes according to the invention in artificial seawater at +600mV SCE of material with different final annealing temperatures (1020°C and 1060°C). | | | | | | | | |
|---|---|---|---|---|---|---|---|---|
| Test | CPT (°C) 1 | CPT (°C) 2 | CPT (°C) 3 | CPT (°C) 4 | CPT (°C) 5 | CPT (°C) 6 | CPT (°C) average | S (°C) |
| 1 (1060°C) | 75 | 75 | 70 | 75 | 75 | 70 | 73 | 3 |
| 2 (1020°C) | 65 | 65 | 70 | 65 | 65 | 70 | 67 | 3 |

**Table 5.**

| Critical pitting corrosion temperature (CPT) of umbilical tubes in 6%FeCl₃ (ASTM G48 test) of material with different final annealing temperatures (1020°C and 1060°C). | | |
|---|---|---|
| Test | CPT (°C) test 1 | CPT (°C) test 2 |
| 1 (1060°C) | 75 | 75 |
| 2 (1020°C) | 65 | 65 |

Tubes with dimensions around 10-20 mm inner diameter are usually used in an umbilical. For the steel grade SAF 2507 for these dimensions a yield point in tension of 650 MPa and a tensile strength of 850 MPa are used as those values which can be guaranteed and thereby be used for design calculations on the umbilical. The tubes which are manufactured with a corresponding method in the steel grade that the present invention relates to, with corresponding dimensions, surprisingly appear having a yield point in tension over 850 MPa and a tensile strength over 1000 MPa with retained ductility A min 25% (see Table 6).
To meet the minimum demand of elongation a final annealing temperature of 1060°C, while a final annealing temperature of 1020°C implies that the minimum request for elongation certainly not can be complied with requirements. Those results indicate that the tube wall can be reduced with almost 20-25% compared with a SAF 2507 tube for the same application. For an umbilical of 2 km with for instance 12 tubes in the configuration such reduction of the wall thickness could imply a very considerable total weight reduction.

**Table 6.**

| Values for the strength of umbilical tubes of a dimension of 15.1x1.2 mm at room temperature and two different annealing temperatures (1020°C and 1060°C). | | | |
|---|---|---|---|
| | R_{p0,2} (MPa) | Rₘ (MPa) | A (%) |
| 1060°C | | | |
| 1 | 876 | 1021 | 27,6 |
| 2 | 882 | 1029 | 28,1 |
| 3 | 893 | 1059 | 27,5 |
| 4 | 891 | 1043 | 27,2 |
| 5 | 912 | 1070 | 27,6 |
| 6 | 883 | 1039 | 27,2 |
| average | 890 | 1044 | 27,5 |

| 1020°C | | | |
|---|---|---|---|
| 1 | 892 | 1036 | 24,5 |
| 2 | 887 | 1026 | 23,6 |
| 3 | 886 | 1033 | 25,0 |
| 4 | 894 | 1032 | 26,6 |
| 5 | 900 | 1035 | 24,1 |
| 6 | 889 | 1024 | 26,4 |
| average | 891 | 1031 | 25,0 |

It is obvious that an annealing temperature of 1060°C is more favorable than an annealing temperature of 1020°C. The critical pitting corrosion resistance is higher for material annealed at 1060°C and the average for the elongation at tension testing is also the highest for material annealed at 1060°C. It can especially be observed that material, annealed at 1020°C passes the demand of at least 25% elongation, which is the request for the present umbilical material. A suitable annealing temperature for the material is around 1060°C, preferably in the range between 1040-1080°C.
The tube material was welded to butt with the help of 0.8 mm TIG-wire with a similar composition as the basic material. As protective gas under the welding Ar+3%N₂ was used. The composition for the filler material appears from Table 7.

**Table 7.**

| Composition of the TIG-wire used in the welding-test. | | | | | | | | |
|---|---|---|---|---|---|---|---|---|
| C | Si | Mn | P | S | Cr | Ni | Mo | N |
| 0,013 | 0,23 | 1,15 | 0,018 | 0,001 | 29,49 | 8,03 | 2,51 | 0,30 |

Material was exposed to a tensile test according to ASTM G48C with a start temperature of 40°C and steps of 5°C. The results appear from Table 8.

**Table 8.**

| Result of the tensile test and pitting corrosion test (Critical pitting corrosion temperature according to ASTM G48C) of butt-welded tubes with two different annealing temperatures for the tube material. | | | | |
|---|---|---|---|---|
| | CPT (°C) | R_{P02} (MPa) | Rₘ (MPa) | A5 (%) |
| 1020°C | 40°C | 873 | 1056 | 15,3 |
| 1060°C | 42,5°C | 859 | 1057 | 16,4 |

The strain control fatigue properties for the material were studied and compared with those of other high alloyed stainless steels. The tests were performed as strain controlled with changing load with a sinusoidal wave shape and an average rate of elongation of 5x10⁻³S⁻¹.
The results appear from Fig. 2.

It appeared that a material, which is most suitable for the above mentioned final annealing and for the rest well-optimized for the application umbilical tube, should have a composition limited to C maximum 0.05%, Si maximum 0.8%, Mn 0.30-1.5%, Cr 28.0-30.0%, Ni 5.80-7.40%, N 0.30-0.40%, Cu maximum 1.0%, W maximum 2.0%, S maximum 0.010%, and the remainder Fe and normally occurring impurities, at which the content of ferrite constitutes 30-70% and the balance austenite. After final cold rolling the tubes are subjected to a final annealing at 1040-1080 °C during a time of 3-10 minutes, followed by a water quenching.

It appeared that the steel of the present invention has fatigue properties in the same range as SAF 2507. The strain control fatigue properties indicate how much and how many times a material can be subjected for extension before strain fatigue raises in the material. Since the umbilical tubes will be welded together to long lengths, coiled on drums before they are twisted into the umbilical, it is not unusual that a number of work cycles will be done where a certain plastically deformation occurs, before the umbilical will be used. The data for the strain fatigue, which were taken out, underline that the risk for break in consequence of strain fatigue in an umbilical tube is almost nonexistent.

The steel according to the above mentioned analysis contains properties, which fit excellent for the application as umbilical tubes. The material has a high corrosion resistance in sea water owing to its high PRE-number and is compatible to the presently most used fluids, which are transported in the different tubes of the umbilical. The high strength of the material makes that the wall thickness can be reduced considerably compared with the most common material for this application today, SAF 2507. The weight saving in the umbilical is of extreme importance for oil mining in large ocean depths, which becomes more and more usual.

Joint welding of tubes works satisfactorily, which is a demand for that the umbilicals can be produced. The fatigue properties show that the risk for strain reduced fatigue breakdown is almost nonexistent.

## Claims

1. Use of a ferrite-austenitic alloy steel with a composition C max 0.05 %, Si max to 0.8 %, Mn 0.30-1,5 %, Cr 28.0-30.0 %, Ni 5.80-7.40 %, Mo 2.00-2.50 %, N 0.30-0.40 %, Cu max 1.0 %, W max 2.0 %, S rmax 0.010 %, balance Fe and unavoidable impurities, containing 30-70 % ferrite and the balance austenite for manufacturing tubes annealed at a temperature of 1040°-1080°C after cold rolling, said tubes are suitable to be filled with hydraulic fluid, as transport tubes suitable for solutions for chemical injection, or another use in umbilicals, in the off-shore industry.

2. Use of an alloy according to claim 1, which exhibits a yield point in tension in seamless tubes of at least 750 MPa and at the same time an elongation of at least 25 %.

3. Use of an alloy according to claim 1, which exhibits a yield point in tension for seamless tubes of at least 850 MPa and at the same time an elongation of at least 25 %.

4. Use of an alloy according to any of the claims 1 -3, in the shape of steel tubes, which are butt-welded to each other and coiled on cylinder.

5. Use of an alloy according to any of the claims 1 - 4, whereby the material is used in the shape of a hot extruded seamless tube which after cold rolling is subjected to an annealing at a temperature of 1040-1080°C under a holding time of 3 - 10 minutes followed by a water quenching.

## Patentansprüche

1. Verwendung einer ferritisch-austenitischen Stahllegierung mit einer Zusammensetzung C max 0,05 %, Si max bis 0,8 %, Mn 0,30-1,5 %, Cr 28,0-30,0 %, Ni 5,80-7,40 %, Mo 2,00-2,50 %, N 0,30-0,40 %, Cu max 1,0 %, W max 2,0 %, S max 0,010 %, Rest Fe und unvermeidbare Verunreinigungen mit einem Gehalt von 30-70 % Ferrit und dem Rest Austenit für die Herstellung von Röhren, die nach Kaltwalzen bei einer Temperatur von 1040-1080 °C geglüht werden, wobei diese Röhren geeignet sind, mit hydraulischem Fließmittel gefüllt zu werden, als Unterwasserhilfsleitungen geeignet für Lösungen für Chemikalieneinspritzung oder andere Verwendung in der küstennahen Industrie sind.

2. Verwendung einer Legierung nach Anspruch 1, die eine Streckgrenze bei Zugspannung in nahtlosen Röhren von wenigstens 750 MPa und gleichzeitig eine Dehnung von wenigstens 25 % zeigt.

3. Verwendung einer Legierung nach Anspruch 1, die eine Streckgrenze bei Zugspannung für nahtlose Röhren von wenigstens 850 MPa und gleichzeitig eine Dehnung von wenigstens 25 % zeigt.

4. Verwendung einer Legierung nach einem der Ansprüche 1 bis 3 in der Form von Stahlröhren, die aneinander stumpfgeschweißt und auf Zylinder aufgespult sind.

5. Verwendung einer Legierung nach einem der Ansprüche 1 bis 4, wobei das Material in der Form einer heißen extrudierten nahtlosen Röhre verwendet wird, die nach Kaltwalzen bei einer Temperatur von 1040-1080 °C mit einer Verweilzeit von 3-10 Minuten geglüht und dann mit Wasser abgeschreckt wird.

## Revendications

1. Utilisation d'un acier d'alliage austéno-ferritique avec une composition de 0,05 % maximum de C, 0,8 % maximum de Si, de 0,30 à 1,5 % de Mn, 28,0 à 30,0 % de Cr, de 5,80 à 7,40 % de Ni, de 2,00 à 2,50 % de Mo, de 0,30 à 0,40 % de N, 1,0 % maximum de Cu, 2,0 % maximum de W, 0,010 % maximum de S, le reste étant du Fe et des impuretés inévitables, contenant de 30 à 70 % de ferrite et le reste d'austénite, pour fabriquer des tubes recuits à une température de 1 040 °C à 1 080 °C après un laminage à froid, lesdits tubes conviennent pour être remplis d'un fluide hydraulique comme tubes de transport appropriés à des solutions d'injection chimique ou à une autre utilisation dans des câbles ombilicaux dans l'industrie offshore.

2. Utilisation d'un alliage selon la revendication 1, qui présente une limite élastique en traction dans des tubes sans soudure d'au moins 750 mPa et en même temps un allongement d'au moins 25 %.

3. Utilisation d'un alliage selon la revendication 1, qui présente une limite élastique en traction de tubes sans soudure d'au moins 850 mPa et en même temps un allongement d'au moins 25 %.

4. Utilisation d'un alliage selon l'une quelconque des revendications 1 à 3, sous la forme de tubes en acier, qui sont soudés bout à bout les uns aux autres et enroulés en spirale sur un cylindre.

5. Utilisation d'un alliage selon l'une quelconque des revendications 1 à 4, où le matériau est utilisé sous la forme d'un tube sans soudure extrudé à chaud qui, après un laminage à froid, est soumis à un recuit à une température de 1 040 à 1 080 °C avec un temps de maintien de 3 à 10 minutes, suivi d'une trempe à l'eau.
